# EUROPÄISCHE PATENTSCHRIFT

(11) **EP 3 931 462 B1**
(45) Veröffentlichungstag und Bekanntmachung des Hinweises auf die Patenterteilung: **12.03.2025**
(21) Anmeldenummer: 20704389.4
(22) Anmeldetag: 29.01.2020
(51) Int. Cl.: F16F 15/12

(54) **TORSIONSSCHWINGUNGSDÄMPFER MIT EINER ROTATIONSACHSE FÜR EINEN ANTRIEBSSTRANG**
TORSIONAL VIBRATION DAMPER WITH A ROTATION AXIS FOR A DRIVE TRAIN
DISPOSITIF D'AMORTISSEMENT DE TORSION AVEC UN AXE DE ROTATION POUR UNE CHAÎNE CINÉMATIQUE

(30) Priorität: 27.02.2019 DE 102019105010; 06.08.2019 DE 102019121204
(43) Veröffentlichungstag der Anmeldung: 05.01.2022
(73) Patentinhaber: Schaeffler Technologies AG & Co. KG, 91074 Herzogenaurach (DE)
(72) Erfinder: HÄSSLER, Martin, 76676 Graben-Neudorf (DE); RUSCH, Alain, 67760 Gambsheim (FR); THERIOT, Laurent, 67000 Strasbourg (FR); KESSLER, Michael, 77815 Bühl (DE)
(86) Internationale Anmeldenummer: PCT/DE2020/100057
(87) Internationale Veröffentlichungsnummer: WO 2020/173521

(56) Entgegenhaltungen:
- WO-A1-2018/215018
- DE-A1- 102015 211 899
- JP-A- H04 113 028

## Beschreibung

Die Erfindung betrifft einen Torsionsschwingungsdämpfer mit einer Rotationsachse für einen Antriebsstrang.

Aus dem Stand der Technik sind Torsionsschwingungsdämpfer verschiedenster Art bekannt. Beispielsweise ist aus der EP 2 508 771 A1 ein Torsionsschwingungsdämpfer bekannt, bei welcher eine Ausgangsseite mit einem (Doppel-) Nocken versehen ist, welcher auf ein hebelartiges Zwischenelement wirkt, wobei das Zwischenelement verkippbar mit einer Scheibe einer Eingangsseite verbunden ist. Das Zwischenelement ist mittels einer Druckfeder gegen den Nocken der Ausgangsseite vorgespannt und wird beim Überlaufen der Nockengeometrie gegen die Druckfeder ausgelenkt. Die Druckfeder ist gegenüberliegend des Zwischenelements mit der Eingangsseite druckkraftübertragend verbunden, und somit wird ein Drehmoment über die Druckfeder von der Eingangsseite auf die Ausgangsseite geleitet.

Aus der FR 3 057 321 A1 ist ein andere Variante eines Torsionsschwingungsdämpfers bekannt, bei welchem an einer Ausgangsseite ein hebelartiger Federkörper nach Art einer (Freiform-) Festkörperfeder vorgesehen ist, wobei dieser Federkörper radial außenseitig eine rampenartige Übersetzungsbahn aufweist, welche mit einer auf dieser Übersetzungsbahn abwälzenden Rolle drehmomentübertragend verbunden sind. Die Rolle ist auf einem Bolzen rotierbar gelagert. Tritt eine Torsionsschwingung auf, so wird eine Relativbewegung zwischen dem Federkörper und der korrespondierenden Rolle bewirkt, und aufgrund der rampenartigen Übersetzungsbahn wird der Federkörper in seiner rotatorischen Relativbewegung zu der Rolle von der Rolle entgegen seiner Federkraft hebelartig ausgelenkt. Damit wird eine Torsionsschwingung gedämpft.

Sowohl die Hebel aus der EP 2 508 771 A1 als auch die Federkörper der FR 3 057 323 A1 sind, sofern eine geringe Dissipation also ein hoher Wirkungsgrad erwünscht ist, technisch schwer zu beherrschen und/oder teuer in der Fertigung beziehungsweise Montage.

Beispielsweise aus der WO 2018 / 215 018 A1 ist ein Torsionsschwingungsdämpfer bekannt, bei welchem zwei Zwischenelemente vorgesehen sind, welche zwischen einer Ausgangsseite und einer Eingangsseite über Wälzkörper gelagert sind. Die Wälzkörper laufen derart auf komplementären Übersetzungsbahnen ab, dass die Zwischenelemente einer Zwangsführung unterliegen. Die beiden Zwischenelemente sind mittels Energiespeicherelementen gegeneinander vorgespannt, sodass die funktionswirksame Steifigkeit der Energiespeicherelemente unabhängig von einer Drehmomentübertragung auslegbar sind. Für viele Anwendungen ist es einerseits erforderlich, die Eigenfrequenz eines drehmomentübertragenden Systems zu reduzieren und zugleich ein hohes Drehmoment übertragen zu können. Aus der ersten Forderung folgt, dass die funktionswirksame Steifigkeit gering sein muss. Aus der zweiten Forderung folgt, dass die Steifigkeit der Energiespeicherelemente groß sein muss. Diese gegensätzlichen Forderungen können mittels der Wälzkörper und der Übersetzungsbahnen gelöst werden. Ein Drehmoment wird einzig mittels der Übersetzungsbahnen und der dazwischen angeordneten Wälzkörper zwischen der Eingangsseite und der Ausgangsseite übertragen. Die funktionswirksame Steifigkeit, welche also die Eigenfrequenz verändert, ist aufgrund der geringen Steigung und der großen Verdrehwinkel in einen geringen Federweg übersetzt. Aus diesem Kurvengetriebe resultiert eine (beliebig) geringe funktionswirksame Steifigkeit. Vorteilhaft bei diesem System ist also, dass die Energiespeicherelemente unabhängig von dem (maximalen) übertragbaren Drehmoment auslegbar sind. Allerdings ist die gezeigte Ausführungsform mit einer hohen Anzahl an separaten Wälzkörpern und den hohen Anforderungen an die komplementären Übersetzungsbahnen aufwendig und teuer in der Fertigung und Montage. Damit ist dieses System nicht in allen Bereichen wettbewerbsfähig.

Aus der JP H04 113028 A ist ein Torsionsschwingungsdämpfer bekannt, der auf den Oberbegriff des Anspruchs 1 lesbar ist.

Der vorliegenden Erfindung liegt die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft einen Torsionsschwingungsdämpfer mit einer Rotationsachse für einen Antriebsstrang, aufweisend zumindest die folgenden Komponenten:
- eine Eingangsseite zum Aufnehmen eines Drehmoments;
- eine Ausgangsseite zum Abgeben eines Drehmoments;
- zumindest ein Zwischenelement in drehmomentübertragender Verbindung zwischen der Eingangsseite und der Ausgangsseite;
- zumindest ein Energiespeicherelement, mittels welchem das Zwischenelement relativ zu der Eingangsseite und relativ zu der Ausgangsseite schwingbar abgestützt ist; und
- zumindest einen Wälzkörper,

wobei das Zwischenelement eine dem Wälzkörper zugehörige Übersetzungsbahn aufweist, und
die Eingangsseite oder die Ausgangsseite eine Bahnseite und die jeweils andere Seite eine Kraftseite bildet,
wobei die Bahnseite eine zu der Übersetzungsbahn komplementäre Gegenbahn aufweist,
wobei der Wälzkörper zwischen der Übersetzungsbahn und der Gegenbahn zum Drehmomentübertragen abwälzbar geführt ist.

Der Torsionsschwingungsdämpfer ist vor allem dadurch gekennzeichnet, dass die Kraftseite mittels des Energiespeicherelements mit dem Zwischenelement drehmomentübertragend verbunden ist.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

In einer Ausführungsform bildet die Eingangsseite, beispielsweise in einem Hauptzustand, beispielsweise einer Zugmomentübertragung, die Drehmoment-Eingangsseite, die Bahnseite und die Ausgangsseite die Kraftseite. In einer alternativen Ausführungsform bildet die Ausgangsseite, beispielsweise in einem Nebenzustand, beispielsweise einer Schubmomentübertragung, die Drehmoment-Eingangsseite, die Bahnseite und die Eingangsseite die Kraftseite.

Der hier vorgeschlagene Torsionsschwingungsdämpfer weist eine geringe Anzahl von separaten Komponenten auf und nur eine geringe Anzahl von Wälzkörpern und komplementären Übersetzungsbahnen, welche hier zwischenelementseitig als Übersetzungsbahn und bahnseitig als (komplementäre) Gegenbahn bezeichnet werden. Die Eingangsseite ist hier zum Aufnehmen eines Drehmoments eingerichtet, wobei hier nicht ausgeschlossen ist, dass die Eingangsseite auch zum Abgeben eines Drehmoments eingerichtet ist. Beispielsweise bildet die Eingangsseite in einem Hauptzustand, beispielsweise in einem Antriebstrang eines Kraftfahrzeugs bei einem sogenannten Zugmoment, also einer Drehmomentabgabe von einer Antriebsmaschine, beispielsweise einer Verbrennungskraftmaschine und/oder einer elektrischen Maschine, über einen Getriebestrang auf Fahrzeugräder zum Vortrieb des Kraftfahrzeugs. Die Ausgangsseite ist entsprechend zum Abgeben eines Drehmoments eingerichtet, wobei auch die Ausgangsseite bevorzugt zum Aufnehmen eines Drehmoments eingerichtet ist. Die Ausgangsseite bildet also beispielsweise in der Anwendung in einem Antriebsstrang eines Kraftfahrzeugs in einem Nebenzustand die Eingangsseite für ein sogenanntes Schubmoment, also wenn die Trägheitsenergie des fahrenden Kraftfahrzeugs beim Motorbremsen oder bei der Rekuperation (Gewinnung elektrischer Energie aus der Entschleunigung des Kraftfahrzeugs) das Eingangsdrehmoment bildet.

Damit eine Torsionsschwingung von der Eingangsseite auf die Ausgangsseite oder umgekehrt nicht unmittelbar übertragen wird, ist zumindest ein Zwischenelement vorgesehen, bevorzugt zumindest zwei Zwischenelemente vorgesehen. Das zumindest eine Zwischenelement ist in drehmomentübertragender Verbindung zwischen der Eingangsseite und der Ausgangsseite angeordnet. Das zumindest eine Zwischenelement ist hierbei relativ zu der Eingangsseite und relativ zu der Ausgangsseite bewegbar, sodass eine Torsionsschwingung in das Zwischenelement und damit auf die Energiespeicherelemente mit einer vorbestimmten (funktionswirksamen) Steifigkeit induzierbar ist. Damit ist die Eigenfrequenz, eine Funktion der Masse und der Steifigkeit, des Systems, in welches der Torsionsschwingungsdämpfer eingebunden ist, veränderbar, bevorzugt verringerbar.

Das Zwischenelement ist mittels zumindest eines Energiespeicherelements, beispielsweise einer Bogenfeder, einer Blattfeder, einem Gasdruckspeicher oder vergleichbarem, relativ zu der Kraftseite abgestützt. Die Kraftseite ist von der Eingangsseite oder von der Ausgangsseite gebildet, indem eine entsprechende, bevorzugt einstückige, Verbindungseinrichtung für das zumindest eine Energiespeicherelement ausgebildet ist, beispielsweise eine Anlagefläche und/oder eine Nietstelle.

An der Bahnseite ist das zumindest eine Zwischenelement mittels zumindest eines Wälzkörpers abgestützt, wobei das Zwischenelement für jeweils einen der Wälzkörper eine Übersetzungsbahn aufweist und an der Bahnseite eine komplementäre Gegenbahn für denselben Wälzkörper ausgebildet ist. Die Bahnseite ist von der Ausgangsseite oder von der Eingangsseite gebildet, indem die, bevorzugt mit der Bahnseite einstückig gebildete, Gegenbahn für den zumindest einen Wälzkörper ausgebildet ist. Über die Gegenbahn und Übersetzungsbahn wird ein Drehmoment übertragen. Ebenso wird über das Energiespeicherelement zwischen der Kraftseite und dem Zwischenelement ein Drehmoment übertragen.

Wird beispielsweise ein Drehmoment von der Bahnseite, beispielsweise der Eingangsseite, eingeleitet, so wird infolge eines vorliegenden Drehmomentgradients über dem Torsionsschwingungsdämpfer der Wälzkörper auf der Übersetzungsbahn und der komplementären Gegenbahn aus einer Ruhelage in der entsprechenden Richtung auf der rampenartigen Übersetzungsbahn (hoch) gewälzt. Mit einem hoch Wälzen ist hier lediglich zur Veranschaulichung bezeichnet, dass eine Arbeit verrichtet wird. Genauer wird aufgrund des geometrischen Zusammenhangs eine entgegenstehende Kraft des Energiespeicherelements überwunden. Ein runter Wälzen bedeutet also ein Abgeben eingespeicherter Energie von dem Energiespeicherelement in Form einer Kraft auf das zugeordnete Zwischenelement. Hoch und runter entsprechend also nicht zwangsläufig einer Raumrichtung, auch nicht in einem mitrotierenden Koordinatensystem.

Mit dieser drehmomentbedingten Bewegung zwingt der Wälzkörper dem zugehörigen Zwischenelement eine relative Bewegung gegenüber der Bahnseite und der Kraftseite auf und das antagonistisch wirkende Energiespeicherelement wird entsprechend gespannt. Tritt eine Änderung des anliegenden Drehmoments und einhergehend eine Drehzahldifferenz zwischen der Bahnseite und der Kraftseite auf, wie beispielsweise bei einer Torsionsschwingung, so steht dem die Trägheit (hier) der Kraftseite entgegen und der Wälzkörper wälzt (in vorbestimmter Weise) auf der Übersetzungsbahn sowie auf der komplementären Gegenbahn um die dem anliegenden Drehmoment entsprechenden Lage hin und her. Damit arbeitet der Wälzkörper dem von einem Drehmomentbetrag abhängig gespannten Energiespeicherelement entgegen, sodass eine Eigenfrequenz im Vergleich zu einer Ruhelage beziehungsweise einer Drehmomentübertragung ohne Torsionsschwingungsdämpfer (aber gleicher mitbewegter Schwungmasse) verändert ist.

Die Kraft wird in Form von einer Stauchung, Dehnung, Torsion oder anderen Energieeinspeicherung von dem entsprechend ausgeführten Energiespeicherelement aufgenommen und zeitverzögert, bevorzugt (nahezu) dissipationsfrei, an die Kraftseite weitegegeben. Der Drehmomenteintrag (hier beispielsweise) der Bahnseite inklusive der Torsionsschwingung wird damit, bevorzugt (nahezu) verlustfrei, zeitlich verändert (hier beispielsweise) an die Kraftseite weitergegeben. Darüber hinaus ist die Eigenfrequenz wie oben erläutert nicht konstant, sondern infolge der veränderbaren Lage des Zwischenelements von dem Drehmomentgradienten und damit von dem anliegenden Drehmoment abhängig.

In einem umgekehrten Fall der Einleitung eines Drehmoments über die Kraftseite, beispielsweise die Ausgangsseite, ist das zumindest eine Energiespeicherelement in der anderen Richtung belastet und damit wird eine entsprechende Kraft auf das Zwischenelement eingeleitet. Der Wälzkörper wird entsprechend in der anderen (im Vergleich zu der vorstehenden Beschreibung der Einleitung eines Drehmoments über die Bahnseite entgegengesetzten) Richtung auf der Übersetzungsbahn (hoch) gewälzt. Diese Bewegung des Wälzkörpers folgt also hier erst auf eine Belastung des Energiespeicherelements. Bei einer Änderung des Drehmoments, wie sie bei einer Torsionsschwingung auftritt, wird das zumindest eine Energiespeicherelement um die dem anliegenden Drehmoment entsprechenden Lage ausgelenkt und die eingespeicherte Energie in Form von einer veränderten, also zeitlich verzögerten Bewegung, im Zusammenwirken mit dem abwälzenden Wälzkörper zwischen der Übersetzungsbahn und komplementären Gegenbahn (hier) auf die Bahnseite übertragen. Damit wird die Eigenfrequenz des drehmomentübertragenden Systems, in welches der Torsionsschwingungsdämpfer eingebunden ist, verändert.

Bei einem umgekehrten Aufbau ist die Kraftseite von der Eingangsseite und die Bahnseite von der Ausgangsseite gebildet. Die Funktion ist dann nach vorstehender Beschreibung identisch, wobei dann in der obigen Beschreibung die Eingangsseite durch die Ausgangsseite zu ersetzen ist und die Ausgangsseite durch die Eingangsseite.

In einer Ausführungsform sind zwei oder mehr Zwischenelemente vorgesehen, welche bevorzugt zu der Rotationsachse rotationssymmetrisch angeordnet sind, sodass der Torsionsschwingungsdämpfer mit einfachen Mitteln ausgewuchtet ist. Für eine geringe Anzahl von Komponenten und (Übersetzungs-) Bahnen ist eine Ausführungsform mit genau zwei Zwischenelementen vorteilhaft.

Bevorzugt sind jeweils zwei Energiespeicherelemente zum Einwirken auf ein (einziges) Zwischenelement vorgesehen, wobei die Energiespeicherelemente einander antagonistisch angeordnet sind, und bevorzugt entsprechend der Ausführungsform der Übersetzungsbahn und komplementären Gegenbahn miteinander ins Gleichgewicht gebracht sind. In einer alternativen Ausführungsform ist zumindest eine Zwangsführung vorgesehen, mittels welcher zumindest einem der Zwischenelemente geometrisch geführt eine Bewegung aufgezwungen ist, beispielsweise nach Art von einer Schiene beziehungsweise Nut und umgreifendem Zapfen beziehungsweise hineingreifender Feder. Damit ist die Bewegung des jeweiligen Zwischenelements (geometrisch) überdefiniert.

Es wird weiterhin in einer vorteilhaften Ausführungsform des Torsionsschwingungsdämpfers vorgeschlagen, dass das zumindest eine Zwischenelement einzig mittels des zumindest einen zugehörigen Energiespeicherelements und des zumindest einen zugehörigen Wälzkörpers gelagert ist.

Bei dieser vorteilhaften Ausführungsform weist das zumindest eine Zwischenelement keine weitere Lagerung auf als über den zumindest einen Wälzkörper und über das zumindest eine Energiespeicherelement. Damit treten keine (zusätzlichen) Reibungseffekte auf. In axialer Richtung ist das zumindest eine Zwischenelement mittels des zumindest einen Energiespeicherelements, des zumindest einen Wälzkörpers, einer Anlagefläche der Kraftseite und/oder der Bahnseite geführt.

Bevorzugt ist das zumindest eine Zwischenelement rein reibschlüssig über den zumindest einen Wälzkörper und/oder das zumindest eine Energiespeicherelement axial gehalten und einzig von einem Axialanschlag gegen ein Verlieren bei einer nicht auslegungsgemäßen Belastung mit Axialkraftanteil gesichert.

Es wird weiterhin in einer vorteilhaften Ausführungsform des Torsionsschwingungsdämpfers vorgeschlagen, dass das zumindest eine Zwischenelement mittels zwei antagonistischen Energiespeicherelementen mit der Kraftseite drehmomentübertragend verbunden ist.

**In** dieser Ausführungsform ist eine Vorspannung der Energiespeicherelemente über das Zwischenelement und/oder eine Vorspannung des Zwischenelements gegen den zumindest einen Wälzkörper gut beherrschbar zuverlässig einstellbar. Beispielsweise ist bei baugleichen Energiespeicherelementen die Abhängigkeit von Bauteiltoleranzen, beispielsweise der Federkennlinie eines Energiespeicherelements, gering, indem sich die Toleranzen gegenseitig verringern, beispielsweise eine nach unten abweichende Steifigkeit von der Soll-Steifigkeit des ersten Energiespeicherelements wird von der nach oben abweichenden Steifigkeit des zweiten Energiespeicherelements ausgeglichen oder gemindert. Bei gleicher Abweichungsrichtung ist die Vorspannung zwar insgesamt reduziert oder erhöht im Vergleich zu der Soll-Vorspannung aber dennoch infolge der antagonistischen Wirkung, beispielsweise beidseitig des Zwischenelements, ausgeglichen. **In** einer Ausführungsform ist lediglich die Ruhelage des Zwischenelements verändert. Bevorzugt ist die Toleranz derart gering, dass die Ruhelage innerhalb eines vorbestimmten Toleranzbereichs bleibt. Bei einer Ausführungsform mit zwei Zwischenelementen sind die (vier) Energiespeicherelemente miteinander derart in Verbindung, dass auch das erste (beziehungsweise zweite) Energiespeicherelement des ersten Zwischenelements mit dem zweiten (beziehungsweise ersten) Energiespeicherelement des zweiten Zwischenelements (mittels der Kraftseite) in antagonistischer Wirkverbindung steht und ein ausgleichender Effekt auf die Bauteiltoleranz der Energiespeicherelemente erzielt ist. Insgesamt sinkt damit die Fertigungsgenauigkeit, der Montageaufwand beziehungsweise der Justieraufwand und/oder der Kostenaufwand für Standardbauteile aufgrund einer geringeren Bauteilgüte.

Es wird weiterhin in einer vorteilhaften Ausführungsform des Torsionsschwingungsdämpfers vorgeschlagen, dass das erste Energiespeicherelement eine erste Kraft und eine erste Kraftrichtung auf das Zwischenelement ausübt und das zweite Energiespeicherelement eine zweite Kraft und eine zweite Kraftrichtung auf das Zwischenelement ausübt,
wobei sich die erste Kraft und die zweite Kraft voneinander unterscheiden und/oder sich die erste Kraftrichtung und die zweite Kraftrichtung in einer Ruhelage voneinander unterscheiden.

Es sei darauf hingewiesen, dass die Energiespeicherelemente nicht um eine radiale Achse verkippen beziehungsweise eine solche Verkippung nicht zuträglich für eine Beeinflussung der Eigenfrequenz ist. Die hier beschriebene Kraftrichtung ist also als Vektor definiert, welcher in der Rotationsebene liegt, zu welcher die Rotationsachse normal ausgerichtet ist. Weiterhin sei darauf hingewiesen, dass die Kraftrichtung der beiden antagonistischen Energiespeicherelemente stets nicht gleich ist, sofern sie in einem globalen, also gemeinsamen, Koordinatensystem betrachtet werden. Hier ist also die Kraftrichtung im Vergleich zu der Spiegelung der jeweils anderen Kraftrichtung, nämlich die Spiegelung an einer Ruheachse beziehungsweise Mittellinie (in der Ruhelage) des Zwischenelements und unter Umständen der Kraftseite, gemeint, welche dann von der jeweils anderen Kraftrichtung abweicht.

Die Kraft bezeichnet hier einzig den Betrag eines Kraftvektors, wobei sich der Kraftvektor also in die Kraft (Betrag) und die Kraftrichtung (Wirkrichtung) zerlegen lässt.

Weiterhin sei darauf hingewiesen, dass sich die Kräfte und Kraftrichtungen der beiden antagonistischen Energiespeicherelemente bei einer symmetrischen Auslegung in einem ausgelenkten Zustand des Zwischenelements voneinander unterscheiden und bei einer nicht-symmetrischen Auslegung, wie hier vorgeschlagen, in einem ausgelenkten Zustand gleich sein können.

Bei dieser Ausführungsform ist für eine Zugmomentübertragung und eine dem entgegengerichtete Schubmomentübertragung jeweils eine unterschiedliche Momenten-Kennlinie eingerichtet, sodass die Beeinflussung der Eigenfrequenz mittels des Torsionsschwingungsdämpfers momentrichtungsabhängig unterschiedlich ist. Bevorzugt ist das Zwischenelement hierbei wie zuvor beschrieben mittels einer entsprechenden Übersetzungsbahn ins Gleichgewicht gebracht.

In einer Ausführungsform sind die beiden eingesetzten antagonistischen Energiespeicherelemente (im nicht eingebauten, also entspannten Zustand) gleich. Hierbei ist die unterschiedliche Kraft beispielsweise mittels der voneinander abweichenden Form der Zugmomentpaarung und der Schubmomentpaarung der Übersetzungsbahn eingerichtet (vergleiche nachfolgende Beschreibung dazu). In einer anderen Variante ist die unterschiedliche Kraft mittels eines unterschiedlich langen Einbau-Abstands zwischen der Kraftseite und dem Zwischenelement eingerichtet.

Die unterschiedliche Kraftrichtung ist beispielsweise durch eine unterschiedliche Neigung der Anlageflächen an dem Zwischenelement und/oder an der Kraftseite für die beiden antagonistischen Energiespeicherelemente erreicht. In einer Ausführungsform ist die Kraftrichtung über eine Auslenkung des Zwischenelements variabel, indem zumindest eines der beiden antagonistischen Energiespeicherelemente dabei um eine Achse parallel zu der Rotationsachse verkippt. Infolge einer unterschiedlichen Kraftrichtung ist bei ansonsten identischen Energiespeicherelementen der Einfederweg, also die Energieaufnahme bei einer (gleichen) Auslenkung des Zwischenelements unterschiedlich. Damit ist in dieser Einbausituation die Steifigkeit identischer antagonistischer Energiespeicherelemente unterschiedlich. Es ist hinsichtlich der Kosten und des Montageaufwands beziehungsweise der Montagesicherheit vorteilhaft, gleiche Energiespeicherelemente einzusetzen. In vorstehendem Zusammenhang sind identische Energiespeicherelemente jedoch einzig zur Verdeutlichung des Zusammenhangs genannt und die Anwendung unterschiedlicher Kraftrichtungen ist nicht auf einen solchen Fall beschränkt.

Erfindungsgemäß ist das zumindest eine Zwischenelement mittels zwei Wälzkörpern an der Bahnseite abgestützt.

Bei dieser Ausführungsform ist dem Zwischenelement infolge einer Doppelführung durch zwei Wälzkörper und zwei zueinander synchronisierte Übersetzungsbahn mit und jeweils komplementären Gegenbahnen eine Bewegungsform aufgezwungen. Eine solche Ausführungsform ist dabei derart einrichtbar, dass dem zumindest einen Energiespeicherelement in Bezug auf die Stabilität der Lage des Zwischenelements, beispielsweise mittels eines Radialkraftanteils der Kraft auf das zugehörige Zwischenelement, allein eine Vorspannfunktion gegen die Wälzkörper zukommt. Zudem ist es auch bei einer Ausführungsform ohne zusätzliche (Zwangs-) Führungselemente nicht notwendig, ein Momentengleichgewicht mit den eingeleiteten Kräften auf das Zwischenelement einzustellen. Einzig die resultierende radiale Anpresskraft muss ausreichend groß sein, um eine Drehmomentübertragung mittels der Übersetzungsbahn, also der Zugmomentpaarung oder der Schubmomentpaarung, bei anliegendem Drehmoment zu gewährleisten. In einer bevorzugten Ausführungsform ist ein solches Momentengleichgewicht angenähert, sodass Dissipationseffekte infolge von erzwungenen Relativbewegung zwischen dem zumindest einen Energiespeicherelement und dem zugehörigen Zwischenelement reduziert sind oder sogar vermieden sind.

In einer bevorzugten Ausführungsform erfordert bei einer (zwangsführungsfreien) Ausführungsform ohne zusätzliche (Zwangs-) Führungselemente für eine Zwangsführung, dass die eingeleitete Kraftrichtung der Kraft, also die Ausrichtung des Kraftvektors entlang oder parallel zu einer Wirklinie, des zumindest einen Energiespeicherelements, bevorzugt der zwei Energiespeicherelemente, sich unabhängig von der Auslenkung des Zwischenelements in dem Momentenbilanzpunkt des Zwischenelements mit derjenigen Wirklinie der resultierenden (Gegen-) Kraft über den Wälzkörper schneidet, welche durch das Wälzzentrum (Wälzachse) des Wälzkörpers verläuft und senkrecht zu der Übersetzungsbahn und zu der komplementären Gegenbahn ausgerichtet ist. Somit liegt an dem Zwischenelement um den Momentenbilanzpunkt des Zwischenelements ein Momentengleichgewicht vor. Daraus folgt intrinsisch, dass der Kraftanteil des über den Wälzkörper geleiteten Kraftvektors der Kraft beziehungsweise dem auf das Zwischenelement wirkenden Kraftanteil des zumindest einen Energiespeicherelements entspricht. Das heißt, wird die Kraft des Energiespeicherelements erhöht, erhöht sich bei dieser Konstruktionsregel auch die resultierende Kraft über den Wälzkörper. Die Kraftvektoren bei zwei antagonistischen Energiespeicherelemente bildet somit ein Kraft-Dreieck.

Es wird weiterhin in einer vorteilhaften Ausführungsform des Torsionsschwingungsdämpfers vorgeschlagen, dass die Übersetzungsbahn und die komplementäre Gegenbahn eine Zugmomentpaarung mit einer ersten Übersetzungskurve und eine Schubmomentpaarung mit einer zweiten Übersetzungskurve umfasst, wobei die Zugmomentpaarung zur Drehmomentübertragung von der Eingangsseite auf die Ausgangsseite eingerichtet ist, wobei die Schubmomentpaarung zur Drehmomentübertragung von der Ausgangsseite auf die Eingangsseite eingerichtet ist,
und wobei die erste Übersetzungskurve und die zweite Übersetzungskurve zumindest bereichsweise voneinander unterschiedliche Übersetzungsverläufe aufweisen.

Grundsätzlich unterscheiden sich ein Zugmoment und ein Schubmoment in einem theoretischen Anwendungsfall nicht. Die Begriffe sind daher neutral zu sehen und dienen einzig einer einfachen Unterscheidbarkeit der bezeichneten Drehmomentübertragungsrichtung. Diese Begriffe sind den üblichen Bezeichnungen in einem Antriebsstrang eines Kraftfahrzeugs entnommen, aber für andere Anwendungen entsprechend übertragbar. Die Zugmomentpaarung liegt bei einer Zugmomentübertragung, beispielsweise von der Eingangsseite auf die Ausgangsseite an, wobei mit zunehmendem Drehmoment der Wälzkörper auf der Zugmomentpaarung entgegen der Kraft des antagonistischen Energiespeicherelements (hoch) wälzt. Damit wird das Potential dieses antagonistischen Energiespeicherelements erhöht, beispielsweise gespannt und damit die Steifigkeit verändert. Torsionsschwingungen wirken daher mit zunehmendem Drehmoment einer größeren Kraft des antagonistischen Energiespeicherelements entgegen und die Eigenfrequenz ist damit verändert. Für die Schubmomentpaarung gilt dies entsprechend, wobei der Wälzkörper infolge der Belastung des Energiespeicherelements zum (hoch) Wälzen auf der Schubmomentpaarung gezwungen wird.

Bei dieser Ausführungsform ist die erste Übersetzungskurve und die zweite Übersetzungskurve, welche jeweils von einem gemeinsamen Punkt der Ruhelage beginnen, mit unterschiedlichen Übersetzungsverläufen versehen. Die Steifigkeitseigenschaften des Torsionsschwingungsdämpfers sind daher individuell für ein Zugmoment und ein Schubmoment (unterschiedlich) einrichtbar.

In einer Ausführungsform ist beispielsweise für das Übertragen eines Zugmoments ein größeres Dämpfungsmoment erforderlich, was entsprechend über einen größeren Verdrehwinkel (ein geringeres Untersetzungsverhältnis, also kleinerer Nenner des Übersetzungsverhältnisses) erreichbar ist als dies für ein Schubmoment (ein größeres Untersetzungsverhältnis) erwünscht ist. Weiterhin ist beispielsweise eine progressive oder degressive Schwingungsdämpfung erwünscht oder sogar eine mehrfach veränderliche Schwingungsdämpfung erwünscht. Beispielsweise ist für den leerlaufnahen Bereich ein geringer Dämpfungsmomentanstieg, für ein Hauptlastdrehmoment ein steiler Dämpfungsmomentanstieg, welcher sich wieder zunehmend degressiv verringert, und bis zu einem Maximalübertrag eines übertragbaren Drehmoments ist wieder ein progressiver Anstieg des Dämpfungsmoments eingerichtet.

Die Übersetzungsbahn und die komplementäre Gegenbahn sind dabei entsprechend der jeweiligen Auslenkungslage des Zwischenelements auszulegen, sodass die Übersetzungskurve mit der Bewegung des Zwischenelements überlagert auszuführen ist. Die Übersetzungsbahn und die komplementäre Gegenbahn sind bevorzugt für ein Momentengleichgewicht gemäß der vorstehenden Beschreibung ausgeführt, bevorzugt, sodass keine zusätzliche (Zwangs-) Führungseinrichtung für das Zwischenelement notwendig ist.

Es wird weiterhin in einer vorteilhaften Ausführungsform des Torsionsschwingungsdämpfers vorgeschlagen, dass das zumindest eine Energiespeicherelement eine Schraubendruckfeder mit gerader Federachse ist.

Eine Schraubendruckfeder mit gerader Federachse, auch als (rein) zylindrische Schraubendruckfeder bezeichnet, ist ein vielfältig eingesetztes Standardbauteil, dessen elastische und (geringen) dissipative Eigenschaften gut ausgeleuchtet und einfach beherrschbar sind. Toleranzen in der Baulänge beziehungsweise der Federkennlinie auf eine vorbestimmte Einbaulänge sind mit einfachen Mitteln ausgleichbar. Zudem benötigen solche Schraubendruckfedern keine zusätzliche Führung, welche ansonsten Reibung verursachen und damit einen verringerten Wirkungsgrad und/oder eine aufgrund von Hysterese-Effekten schwieriger zu ermittelnde Dämpfungseigenschaft aufweisen können. Zudem ermöglicht eine Schraubendruckfeder eine große Varianz in der Federkennlinie, welche unter anderem durch Windungssteigung, Drahtdicke, Verhältnis der Einbaulänge zur entspannten Länge und die Materialwahl einstellbar ist.

Zudem sind Schraubendruckfeder mit gerader Federachse im Vergleich zu anderen Bauarten von Federn, beispielsweise Stahlfedern, bruchsicher und können in einigen Ausführungsformen auf Block belastet werden, sodass für den Fall einer gemäß der Auslegung auftretenden Überlast an dem Torsionsschwingungsdämpfer bei einer solchen auf Block bringbaren Ausführungsform des Energiespeicherelements kein zusätzliches Sicherungselement gegen Brechen des Energiespeicherelements vorgesehen werden muss. Zudem hat eine Schraubendruckfeder den Vorteil eines sehr langen möglichen Federwegs bei gleichzeitig einer hohen Federsteifigkeit, sodass einerseits ein großes Drehmoment über das zumindest eine Energiespeicherelement leitbar ist und andererseits mithilfe der Übersetzungsbahn eine geeignete Bewegungsuntersetzung einrichtbar ist, sodass gegenüber der Amplitude der Torsionsschwingung eine verringerte Amplitude der Bewegung des Zwischenelements erreicht ist und somit die Torsionsschwingungen in einem sehr geringen Federweg der Schraubendruckfeder resultiert. Im Resultat wirkt die Schraubendruckfeder gegenüber der Torsionsschwingung trotz hoher Steifigkeit mit einer (geeignet) geringen Kraft entgegen.

Es wird weiterhin in einer vorteilhaften Ausführungsform des Torsionsschwingungsdämpfers vorgeschlagen, dass das zumindest eine, bevorzugt als Schraubendruckfeder mit gerader Federachse ausgeführte, Energiespeicherelement an dem Zwischenelement und/oder an der Kraftseite quer zu der Federachse verschiebbar gelagert ist.

Infolge einer solchen Verlagerbarkeit ist einer freien Auslenkbarkeit des Zwischenelements ein geringes entgegenstehendes Moment (um den Momentenbilanzpunkt des Zwischenelements) ausgeübt, trotz eines in vielen Ausführungsformen zwangsläufigen radialen Bewegungsanteils der Bewegung des Zwischenelements und/oder einer nicht tangentialen Ausrichtung der Federachse im Angriffspunkt an dem Zwischenelement beziehungsweise an der Anlagefläche der Kraftseite. Die Verschiebbarkeit ist mittels einer geeigneten Oberflächeneigenschaft mit einer geringen entgegenstehenden Reibkraft oder mittels einer separaten Lagerpaarung eingerichtet. Gegen ein Verkippen des Energiespeicherelements ist eine Führung vorgesehen oder die relative Bewegung derart gering, dass trotz (geringer) Reibkräfte ein Kippmoment nie ausreichend groß ist, um das Energiespeicherelement entsprechend auszulenken.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Prinzip-Skizze eines nicht erfindungsgemäßen Torsionsschwingungsdämpfers in einer ersten Ausführungsform;
- Fig. 2:: eine Prinzip-Skizze eines nicht erfindungsgemäßen Torsionsschwingungsdämpfers in einer zweiten Ausführungsform;
- Fig. 3:: ein Schaubild der anliegenden Kräfte an einem Zwischenelement;
- Fig. 4:: ein Kraft-Dreieck der anliegenden Kräfte gemäß Fig. 3;
- Fig. 5:: eine Prinzip-Skizze eines erfindungsgemäßen Torsionsschwingungsdämpfers in einer dritten Ausführungsform;
- Fig. 6:: eine Prinzip-Skizze eines erfindungsgemäßen Torsionsschwingungsdämpfers in einer vierten Ausführungsform;
- Fig. 7:: ein Moment-Verdrehwinkel-Diagramm mit einem ersten Übersetzungsverlauf;
- Fig. 8:: ein Moment-Verdrehwinkel-Diagramm mit einem zweiten Übersetzungsverlauf;
- Fig. 9:: ein Moment-Verdrehwinkel-Diagramm mit einem dritten Übersetzungsverlauf; und
- Fig. 10:: ein Moment-Verdrehwinkel-Diagramm mit einem vierten und fünften Übersetzungsverlauf.

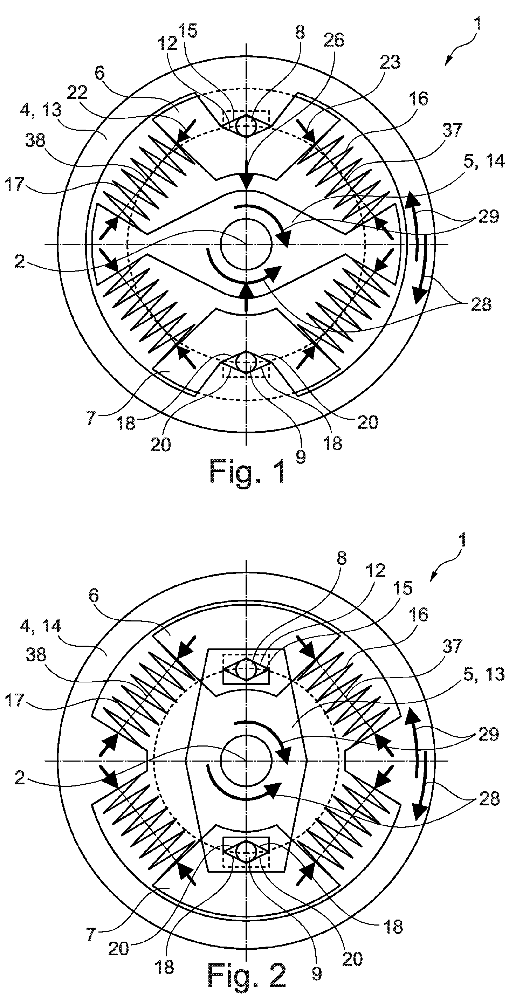

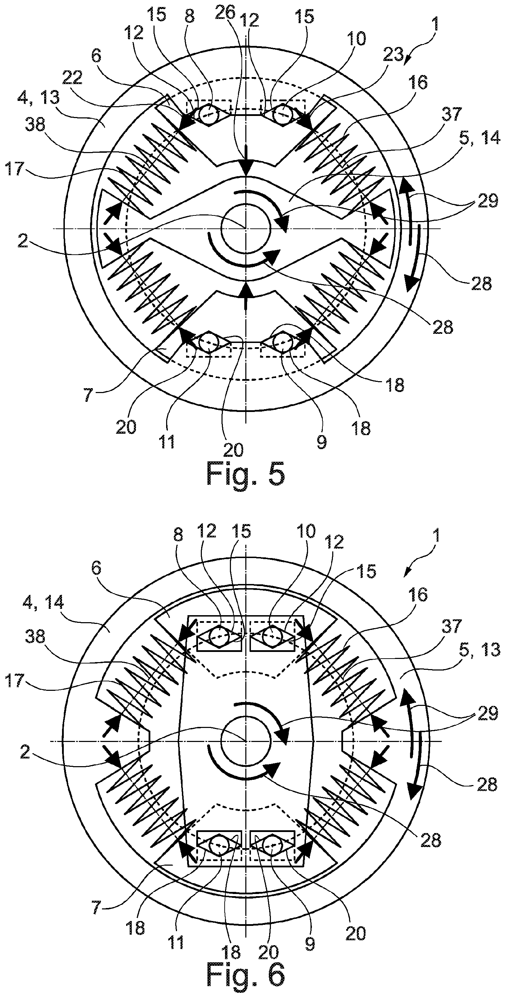

Fig. **1,** Fig. **2****,** Fig. **5** und Fig. **6** zeigen jeweils in einer Prinzip-Skizze beispielhaft unterschiedliche Ausführungsformen eines Torsionsschwingungsdämpfers **1,** welche der Übersichtlichkeit halber weitestgehend gleich dargestellt sind und insofern auf die Beschreibungen zu den jeweiligen Figuren von gleichen Komponenten querverwiesen wird. Hierbei bildet eine Ringscheibe eine Eingangsseite **4,** welche in Fig. **1** und Fig. **5** die Bahnseite **13** ausbildet und in Fig. **2** und Fig. **6** die Kraftseite **14** ausbildet. Im Zentrum bei der gemeinsamen Rotationsachse **2** ist ein weiteres Scheibenelement beispielsweise als Ausgangsseite **5** ausgebildet, welche in Fig. **1** und Fig. **5** die Kraftseite **14** ausbildet und in Fig. **2** und Fig. **6** die Bahnseite **13** ausbildet. Alternativ ist die Ringscheibe die Ausgangsseite **5** und das Scheibenelement die Eingangsseite **4.** Im Folgenden wird die zuvor genannte Variante beschrieben, wobei die Begriffe austauschbar sind.

Wie mit den Pfeilen angedeutet sind ein Zugmoment **28** von der Eingangsseite **4** auf die Ausgangsseite **5** übertragbar und ein Schubmoment **29** von der Ausgangsseite **5** auf die Eingangsseite **4** übertragbar. In einer Ausführungsform ist die Momentenrichtung umgekehrt eingerichtet.

Zwischengeschaltet zwischen der Eingangsseite **4** und der Ausgangsseite **5** sind zwei Zwischenelemente **6, 7** vorgesehen, wobei zu der Kraftseite **14** hin das jeweilige Zwischenelement **6, 7** von paarig angeordneten erstem Energiespeicherelement **16** und zweitem Energiespeicherelement **17** kraftübertragend, und damit drehmomentübertragend, verbunden ist und bahnseitig mittels einer Übersetzungsbahn **12** und einem ersten beziehungsweise zweiten darauf abwälzenden Wälzkörper **8, 9** zu der komplementären Gegenbahn **15** an der Bahnseite **13** kraftübertragend und damit drehmomentübertragend abgestützt ist. Die Wälzkörper **8, 9** sind dabei mittels der Energiespeicherelemente **16, 17** gegen die Übersetzungsbahn **12** und gegen die Gegenbahn **15** vorgespannt und dadurch daran abwälzbar geführt. Die Energiespeicherelemente **16, 17** halten das Zwischenelement **6, 7** einander antagonistisch wirkend in einer Ruhelage in der gezeigten Position. An dem zweiten Wälzkörper **9** in der Darstellung ist gezeigt, dass seitlich der Ruhelage, in welcher der zweite Wälzkörper **9** dargestellt ist, eine Zugmomentpaarung **18** aus dem jeweils komplementären Rampenanteil der Übersetzungsbahn **12** und der Gegenbahn **15** sowie eine Schubmomentpaarung **20** auf der jeweils anderen Seite aus den komplementären Rampenanteilen der Übersetzungsbahn **12** und der Gegenbahn **15** gebildet sind. Deren Wirkweise wird nachfolgend detailliert erläutert. In den gezeigten Ausführungsformen sind die Zwischenelemente **6, 7** einzig über die Energiespeicherelemente **16, 17** und den jeweiligen Wälzkörper **8, 9** abgestützt.

In Fig. **2** ist im Vergleich zu Fig. **1** eine umgekehrte Ausführungsform hinsichtlich der Bahnseite **13** und Kraftseite **14** gezeigt, sodass die Eingangsseite **4** hier die Kraftseite **14** bildet und die Ausgangsseite **5** die Bahnseite **13.**

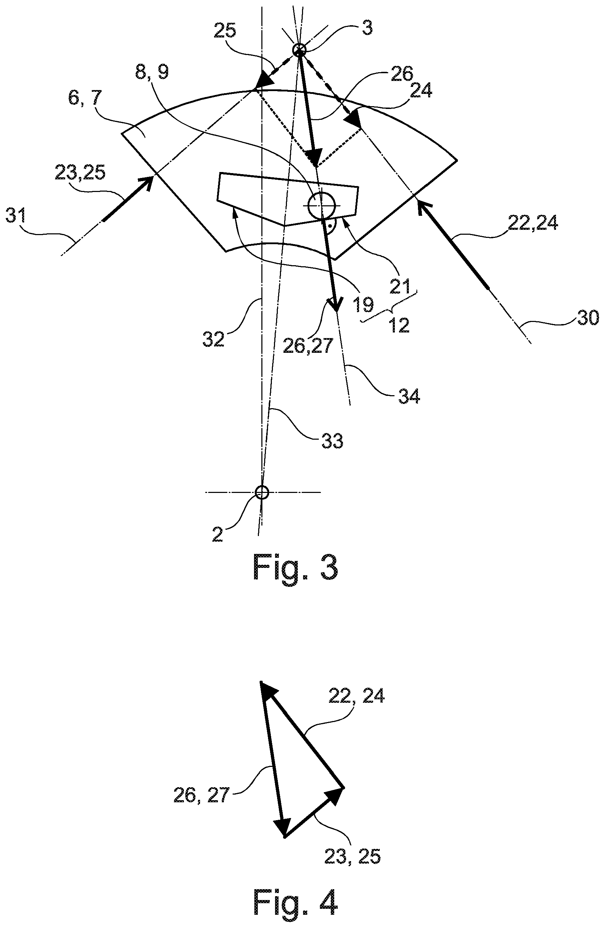

In Fig. **3** ist ein Schaubild des Momentengleichgewichts und in Fig. **4** ein Kraft-Dreieck über dem ersten Zwischenelement **6** oder zweiten Zwischenelement **7** mit einem ersten Wälzkörper **8** beziehungsweise zweiten Wälzkörper **9** gemäß der Ausführungsform in Fig. **1** dargestellt. Hierbei ist das Zwischenelement **6, 7** aus seiner Ruhelage herausgeführt und in einem Auslenkwinkel zu der Ruhelage mit seiner Mittellinie **33** geneigt zu der Ruhelinie **32** ausgelenkt. Die Ruhelinie **32,** welche in der Ruhelage mit der Mittellinie **33** deckungsgleich ist, verläuft wie auch die Mittellinie **33** stets durch die Rotationsachse **2,** aber einzig in der Ruhelage durch den Momentenbilanzpunkt **3** des Zwischenelements **6, 7.** Die Mittellinie **33,** welche nicht als geometrische oder massebezogene, sondern kraftbezogene Mitte des Zwischenelements **6, 7** zu verstehen ist, verläuft stets durch den Momentenbilanzpunkt **3** und die Rotationsachse **2.** Zu diesem Momentenbilanzpunkt **3** des Zwischenelements **6, 7** muss ein Momentengleichgewicht herrschen, sofern gefordert ist, dass keine zusätzliche Führung für das Zwischenelement **6, 7** notwendig ist. Die Ruhelinie **32** muss zu dem anliegenden (theoretisch infinitesimalen) Abschnitt der Übersetzungsbahn **12** stets senkrecht ausgerichtet sein. Die Ruhelinie **32** verläuft durch den Momentenbilanzpunkt **3** und die Wälzachse des Wälzkörpers **8,** 9. Damit diese Regel stets eingehalten bleibt, muss sich eine Parallele der ersten Wirklinie **30** der ersten Kraft **22** ausgehend von dem ersten Energiespeicherelement **16** mit einer zweiten gleich weit oder kraftproportional beabstandeten Parallele der zweiten Wirklinie **31** der zweiten Kraft **23** ausgehend von dem zweiten Energiespeicherelement **17** mit der Mittellinie **33** und mit der Ruhelinie **32** in dem Momentenbilanzpunkt **3** schneiden, sodass kein (wirksamer) Hebelarm entsteht. Weiterhin ist gefordert, dass die erste Kraft **22,** die zweite Kraft **23** und die resultierende Kraft **26** ein sich selbst aufhebendes Kraft-Dreieck bilden, wie es in Fig. **4** dargestellt ist. Hierfür muss die erste Kraftrichtung **24,** die zweite Kraftrichtung **25** und die resultierende Kraftrichtung **27** darstellungsgemäß vorliegen. Aus der gezeigten Lage folgt, dass sowohl das erste Energiespeicherelement **16** (vergleiche Fig. **1****)** als auch das zweite Energiespeicherelement **17** (vergleiche Fig. **1****)** stärker gespannt wird, wodurch eine erhöhte Vorspannkraft auf das Zwischenelement **6, 7** wirkt. Das stärkere Spannen folgt in dieser Ausführungsform aus einer Bewegung des Zwischenelements **6, 7** nach radial innen, sodass die Energiespeicherelemente **16, 17** mit nach radial innen bewegt und zwischen den angrenzenden Zwischenelementen **6, 7** nach Art einer Schraubzwinge gestaucht werden. Die Zwischenelemente **6, 7** werden also derart bewegt, dass der entstehende Abstand entlang der Federachsen **37, 38** der Energiespeicherelemente **16, 17** zwischen dem jeweiligen Zwischenelement **6, 7** und der Kraftseite **14** gegenüber der Ruhelage verkürzt wird, sofern eine erhöhte Steifigkeit bei einem höheren Drehmoment erwünscht ist (vergleiche Fig. **5** bis Fig. **8****).** Für die korrekte Ausrichtung der Drucklinie **34** also der Wirklinie der resultierenden Kraft **26** ist es notwendig, dass die Drucklinie **34,** welche die Wälzachse des Wälzkörpers **8, 9** und den Momentenbilanzpunkt **3** schneidet, stets senkrecht auf der Übersetzungsbahn **12** steht, hier der zweiten Übersetzungskurve **21,** welche dem Schubmoment **29** zugeordnet ist. Der Betrag der resultierenden Kraft **26** und die resultierende Kraftrichtung **27** ergeben sich dann intrinsisch aus der anliegenden ersten Kraft **22** und zweiten Kraft **23.**

In den Fig. **5** und Fig. **6** sind jeweils Varianten zu den Ausführungsformen in Fig. **1** beziehungsweise in Fig. **2** gezeigt, wobei hier eine Zwangsführung an den Zwischenelementen **6, 7** vorliegt, indem neben dem ersten Wälzkörper **8** beziehungsweise dem zweiten Wälzkörper **9** noch ein weiterer, nämlich ein dritter beziehungsweise ein vierter, Wälzkörper **10, 11** vorgesehen ist. Bei dieser Ausführungsform ist in einer Ausführungsform von der Forderung eines Momentengleichgewichts und Kräftegleichgewichts über dem jeweiligen Zwischenelement **6, 7** abgewichen. Es ist einzig erforderlich, dass eine ausreichende Kraft(-vektor-)komponente von dem (ersten) Energiespeicherelement **16** (und hier noch dem zweiten Energiespeicherelement **17)** erzeugt wird, um die Wälzkörper **8, 9, 10, 11** zwischen der jeweiligen Übersetzungsbahn **12** und komplementären Gegenbahn **15** zu halten beziehungsweise das jeweilige Zwischenelement **6, 7** gegen die beiden Wälzkörper **8, 9, 10, 11** zu drücken. Grundsätzlich sind auch mehr Wälzkörper **8, 9, 10, 11** einsetzbar. Im Übrigen wird hinsichtlich Fig. **5** auf die Beschreibung zu Fig. **1** beziehungsweise hinsichtlich Fig. **6** auf die Beschreibung zu Fig. **2** verwiesen.

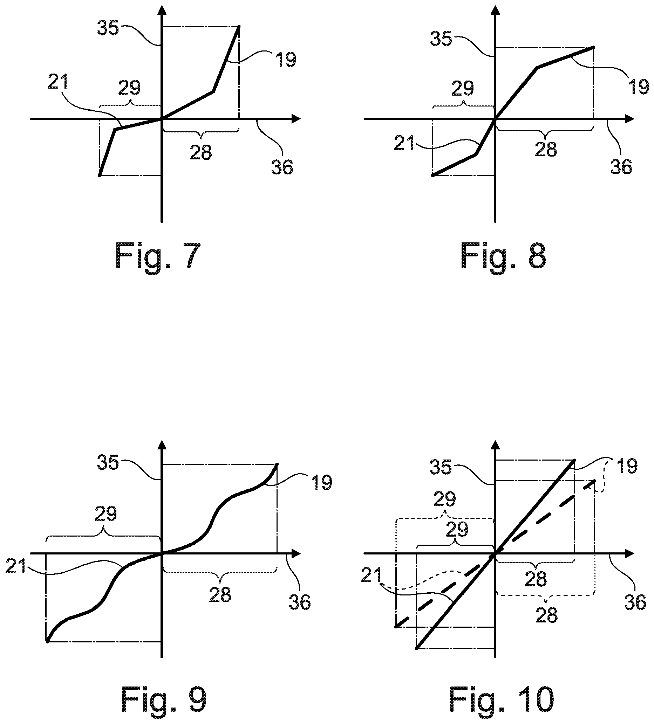

In den Fig. **7** bis Fig. **10** sind Moment-Verdrehwinkel-Diagramme gezeigt, bei welchen die Momentenachse **35** die Ordinate bildet und die Verdrehwinkelachse **36** Abszisse. Rechts der Ordinate ist in diesem Beispiel ein Zugmomentverlauf **28** mit positiv abgetragenem Moment und Verdrehwinkel gezeigt und links der Ordinate ein Schubmomentverlauf **29** mit negativ abgetragenem Moment und Verdrehwinkel.

In Fig. **7** ist eine erste Übersetzungskurve **19,** dann zugehörig zu der Zugmomentpaarung **18,** und eine zweite Übersetzungskurve **21,** dann zugehörig zu der Schubmomentpaarung **20,** in einer zweiteilig-progressiven Form gezeigt, sodass bei niedrigen Drehmomentbeträgen ein flacher Kurvenanstieg und bei hohen Drehmomentbeträgen ein steiler Kurvenanstieg vorliegt.

In Fig. **8** ist eine entsprechend eine zweiteilig-degressive Variante gezeigt, bei welcher bei niedrigen Drehmomentbeträgen ein steiler Kurvenanstieg vorliegt und bei hohen Drehmomentbeträgen ein abgeflachter Kurvenanstieg vorliegt.

In Fig. **9** ist eine Variante gezeigt, bei welcher sich ein progressiver und degressiver Verlauf abwechseln und in Fig. **10** ist im Vergleich ein steifes System mit einem steilen Kurvenverlauf, dargestellt mit durchgezogener Linie, im Vergleich zu einem System mit einem flachen Kurvenverlauf, dargestellt mit gestrichelter Linie, gezeigt.

Für die Ausführungsform in Fig. **1** und Fig. **2** ohne zusätzliche Führung des Zwischenelements **6, 7** ist eine solche Übersetzungskurve **19, 21** nach Maßgabe des Momentengleichgewichts und Kräftegleichgewichts wie in Fig. **3** und Fig. **4** erläutert einzuhalten. Die dargestellte Übersetzungskurve **19, 21** ist daher in Überlagerung mit der Anforderung an die Übersetzungsbahn **12** gemäß der Beschreibung zu Fig. **1** (und Fig. **2****)** auszuführen. Weiterhin ist in einer Ausführungsform die (erste) Kraft **22** beziehungsweise die Steifigkeit des ersten Energiespeicherelements **16** gegenüber dem zweiten Energiespeicherelement **17** in der Ruhelage unterschiedlich und nicht wie in Fig. **1** und Fig. **2** angedeutet symmetrisch ausgeführt. Dies ist weiterhin für die Überlagerung zum Erreichen der gewünschten Übersetzungskurve **19, 21** zu beachten.

Mit dem hier vorgeschlagenen Torsionsschwingungsdämpfer ist mit wenigen Bauteilen eine kostengünstige und effiziente Beeinflussung der Eigenfrequenz erreichbar.

## Patentansprüche

1. Torsionsschwingungsdämpfer (1) mit einer Rotationsachse (2) für einen Antriebsstrang, aufweisend zumindest die folgenden Komponenten:
- eine Eingangsseite (4) zum Aufnehmen eines Drehmoments;
- eine Ausgangsseite (5) zum Abgeben eines Drehmoments;
- zumindest ein Zwischenelement (6,7) in drehmomentübertragender Verbindung zwischen der Eingangsseite (4) und der Ausgangsseite (5);
- zumindest ein Energiespeicherelement (16,17), mittels welchem das Zwischenelement (6,7) relativ zu der Eingangsseite (4) und relativ zu der Ausgangsseite (5) schwingbar abgestützt ist; und
- zumindest einen Wälzkörper (8,9,10,11),
wobei das Zwischenelement (6,7) eine dem Wälzkörper (8,9,10,11) zugehörige Übersetzungsbahn (12) aufweist, und
die Eingangsseite (4) oder die Ausgangsseite (5) eine Bahnseite (13) und die jeweils andere Seite (5,4) eine Kraftseite (14) bildet,
wobei die Bahnseite (13) eine zu der Übersetzungsbahn (12) komplementäre Gegenbahn (15) aufweist,
wobei der Wälzkörper (8,9,10,11) zwischen der Übersetzungsbahn (12) und der Gegenbahn (15) zum Drehmomentübertragen abwälzbar geführt ist,
wobei die Kraftseite (14) mittels des Energiespeicherelements (16,17) mit dem Zwischenelement (6,7) drehmomentübertragend verbunden ist, **dadurch gekennzeichnet, dass** das zumindest eine Zwischenelement (6,7) mittels zwei Wälzkörpern (8,9,10,11) an der Bahnseite (13) abgestützt ist.

2. Torsionsschwingungsdämpfer (1) nach Anspruch **1,** wobei das zumindest eine Zwischenelement (6,7) einzig mittels des zumindest einen zugehörigen Energiespeicherelements (16,17) und des zumindest einen zugehörigen Wälzkörpers (8,9,10,11) gelagert ist.

3. Torsionsschwingungsdämpfer (1) nach Anspruch **1** oder **2,** wobei das zumindest eine Zwischenelement (6,7) mittels zwei antagonistischen Energiespeicherelementen (16,17) mit der Kraftseite (14) drehmomentübertragend verbunden ist,
wobei bevorzugt das erste Energiespeicherelement (16) eine erste Kraft (22) und eine erste Kraftrichtung (24) auf das Zwischenelement (6,7) ausübt und das zweite Energiespeicherelement (17) eine zweite Kraft (23) und eine zweite Kraftrichtung (25) auf das Zwischenelement (6,7) ausübt,
und wobei sich die erste Kraft (22) und die zweite Kraft (23) voneinander unterscheiden und/oder sich die erste Kraftrichtung (24) und die zweite Kraftrichtung (25) in einer Ruhelage voneinander unterscheiden.

4. Torsionsschwingungsdämpfer (1) nach einem der vorhergehenden Ansprüche, wobei die Übersetzungsbahn (12) und die komplementäre Gegenbahn (15) eine Zugmomentpaarung (18) mit einer ersten Übersetzungskurve (19) und eine Schubmomentpaarung (20) mit einer zweiten Übersetzungskurve (21) umfasst, wobei die Zugmomentpaarung (18) zur Drehmomentübertragung von der Eingangsseite (4) auf die Ausgangsseite (5) eingerichtet ist, wobei die Schubmomentpaarung (20) zur Drehmomentübertragung von der Ausgangsseite (5) auf die Eingangsseite (4) eingerichtet ist,
und wobei die erste Übersetzungskurve (19) und die zweite Übersetzungskurve (19) zumindest bereichsweise voneinander unterschiedliche Übersetzungsverläufe aufweisen.

5. Torsionsschwingungsdämpfer (1) nach einem der vorhergehenden Ansprüche, wobei das zumindest eine Energiespeicherelement (16,17) eine Schraubendruckfeder mit gerader Federachse (37,38) ist,
und wobei bevorzugt das zumindest eine Energiespeicherelement (16,17) an dem Zwischenelement (6,7) und/oder an der Kraftseite (14) quer zu der Federachse (37,38) verschiebbar gelagert ist.

## Claims

1. A torsional vibration damper (1) having a rotation axis (2) for a drive train, having at least the following components:
- an input side (4) for receiving a torque;
- an output side (5) for outputting a torque;
- at least one intermediate element (6, 7) in torque-transmitting connection between the input side (4) and the output side (5);
- at least one energy storage element (16, 17) by means of which the intermediate element (6, 7) is supported so as to swing relative to the input side (4) and relative to the output side (5); and
- at least one rolling element (8, 9, 10, 11),
wherein the intermediate element (6, 7) has a transmission path (12) associated with the rolling element (8, 9, 10, 11), and
the input side (4) or the output side (5) forms a track side (13) and the other side (5,4) forms a force side (14),
wherein the track side (13) has a counter track (15) complementary to the transmission track (12),
wherein the rolling element (8, 9, 10, 11) is guided between the transmission track (12) and the counter track (15) so it can be rolled off for torque transmission,
wherein the force side (14) is connected to the intermediate element (6, 7) in a torque-transmitting manner by means of the energy storage element (16, 17), **characterized in that** the at least one intermediate element (6, 7) is supported on the track side (13) by means of two rolling elements (8, 9, 10, 11).

2. The torsional vibration damper (1) according to claim **1,** wherein the at least one intermediate element (6, 7) is mounted solely by means of the at least one associated energy storage element (16, 17) and the at least one associated rolling body (8, 9, 10, 11).

3. The torsional vibration damper (1) according to claim **1** or **2,** wherein the at least one intermediate element (6, 7) is connected to the force side (14) in a torque-transmitting manner by means of two antagonistic energy storage elements (16, 17),
wherein preferably the first energy storage element (16) exerts a first force (22) and a first force direction (24) on the intermediate element (6, 7) and the second energy storage element (17) exerts a second force (23) and a second force direction (25) on the intermediate element (6, 7),
and wherein the first force (22) and the second force (23) differ from one another and/or the first force direction (24) and the second force direction (25) differ from one another in a rest position.

4. The torsional vibration damper (1) according to any one of the preceding claims, wherein the transmission path (12) and the complementary counter path (15) comprise a tension torque pairing (18) with a first transmission curve (19) and a thrust torque pairing (20) with a second transmission curve (21), wherein the tension torque pairing (18) is designed to transmit torque from the input side (4) to the output side (5), wherein the thrust torque pairing (20) is designed to transmit torque from the output side (5) to the input side (4),
and wherein the first transmission curve (19) and the second transmission curve (19) have at least transmission curves that differ from one another at least in sections.

5. The torsional vibration damper (1) according to any one of the preceding claims, wherein the at least one energy storage element (16, 17) is a helical compression spring with a straight spring axis (37, 38),
and wherein preferably the at least one energy storage element (16, 17) is displaceably mounted on the intermediate element (6, 7) and/or on the force side (14) transversely to the spring axis (37, 38).

## Revendications

1. Dispositif d'amortissement de torsion (1) avec un axe de rotation (2) pour une chaîne cinématique, présentant au moins les composants suivants :
- un côté entrée (4) pour recevoir un couple ;
- un côté sortie (5) pour délivrer un couple ;
- au moins un élément intermédiaire (6, 7) en liaison de transmission de couple entre le côté entrée (4) et le côté sortie (5) ;
- au moins un élément de stockage d'énergie (16, 17), au moyen duquel l'élément intermédiaire (6, 7) est supporté de manière oscillante par rapport au côté entrée (4) et par rapport au côté sortie (5) ; et
- au moins un corps de roulement (8, 9, 10, 11),
dans lequel l'élément intermédiaire (6, 7) présente une piste de transmission (12) associée au corps de roulement (8, 9, 10, 11), et
le côté entrée (4) ou le côté sortie (5) forme un côté piste (13) et l'autre côté (5, 4) respectif forme un côté force (14),
dans lequel le côté piste (13) présente une contre-piste (15) complémentaire à la piste de transmission (12),
dans lequel le corps de roulement (8, 9, 10, 11) est guidé de manière à pouvoir rouler entre la piste de transmission (12) et la contre-piste (15) pour transmettre le couple,
dans lequel le côté force (14) est relié à l'élément intermédiaire (6, 7) de manière à transmettre le couple au moyen de l'élément de stockage d'énergie (16, 17), **caractérisé en ce que** l'au moins un élément intermédiaire (6, 7) est supporté sur le côté piste (13) au moyen de deux corps de roulement (8, 9, 10, 11).

2. Dispositif d'amortissement de torsion (1) selon la revendication **1,** dans lequel l'au moins un élément intermédiaire (6, 7) est monté uniquement au moyen de l'au moins un élément de stockage d'énergie (16, 17) associé et de l'au moins un corps de roulement (8, 9, 10, 11) associé.

3. Dispositif d'amortissement de torsion (1) selon la revendication 1 ou 2, dans lequel l'au moins un élément intermédiaire (6, 7) est relié au côté force (14) de manière à transmettre le couple au moyen de deux éléments de stockage d'énergie (16, 17) antagonistes,
dans lequel, de préférence, le premier élément de stockage d'énergie (16) exerce une première force (22) et une première direction de force (24) sur l'élément intermédiaire (6, 7) et le second élément de stockage d'énergie (17) exerce une seconde force (23) et une seconde direction de force (25) sur l'élément intermédiaire (6, 7),
et dans lequel la première force (22) et la seconde force (23) diffèrent l'une de l'autre et/ou la première direction de la force (24) et la seconde direction de la force (25) diffèrent l'une de l'autre dans une position de repos.

4. Dispositif d'amortissement de torsion (1) selon l'une quelconque des revendications précédentes, dans lequel la piste de transmission (12) et la contre-piste (15) complémentaire comprennent un appariement de couple de traction (18) avec une première courbe de transmission (19) et un appariement de couple de poussée (20) avec une seconde courbe de transmission (21), dans lequel l'appariement de couple de traction (18) est conçu pour transmettre le couple du côté entrée (4) au côté sortie (5), dans lequel l'appariement de couple de poussée (20) est conçu pour transmettre le couple du côté sortie (5) au côté entrée (4),
et dans lequel la première courbe de transmission (19) et la seconde courbe de transmission (19) présentent, au moins dans certaines zones, des tracés de transmission qui diffèrent l'un de l'autre.

5. Dispositif d'amortissement de torsion (1) selon l'une quelconque des revendications précédentes, dans lequel l'au moins un élément de stockage d'énergie (16, 17) est un ressort de compression hélicoïdal avec un axe de ressort rectiligne (37, 38),
et dans lequel, de préférence, l'au moins un élément de stockage d'énergie (16, 17) est monté de manière à se déplacer, transversalement à l'axe de ressort (37, 38), sur l'élément intermédiaire (6, 7) et/ou sur le côté force (14).
